Europäisches Patentamt

European Patent Office

Office européen des brevets

(11) Veröffentlichungsnummer: **0 493 751 A2**

(12) **EUROPÄISCHE PATENTANMELDUNG**

(21) Anmeldenummer: **91121824.6**

(22) Anmeldetag: **19.12.91**

(51) Int. Cl.⁵: **H04N 7/18**

(30) Priorität: **21.12.90 DE 9017309 U**

(43) Veröffentlichungstag der Anmeldung:
**08.07.92 Patentblatt 92/28**

(84) Benannte Vertragsstaaten:
**AT DE FR GB IT NL**

(71) Anmelder: **KHADJAVI ELECTRONIC GmbH
Dovenkamp 24
W-2073 Lütjensee(DE)**

(72) Erfinder: **Die Erfindernennung liegt noch
nicht vor**

(74) Vertreter: **Glawe, Delfs, Moll & Partner
Patentanwälte
Postfach 26 01 62 Liebherrstrasse 20
W-8000 München 26(DE)**

(54) **Videoanlage.**

(57) Die Anlage zum Aufnehmen, Aufzeichnen und Wiedergeben von Videobildern mit einer Videokamera (2), einem Bildaufzeichnungsgerät (4) und einem Monitor (3), zeichnet sich dadurch aus, daß sie ein Steuergerät (11) mit Paaren von Kontakten (8), von denen je einer mit je einem der Kontakte (6) der Kontaktpaare der Bedienungsschalter und -tasten (5) des Bildaufzeichnungsgeräts verbunden ist und die elektrisch miteinander verbindbar sind, mit Eingängen/Ausgängen für elektrische Signale, die Zustandsgrößen melden und mit entsprechenden Ausgängen/Eingängen des Bildaufzeichnungsgeräts (1) verbunden sind, mit Bedienungstasten (14) und mit Steuerschaltungen aufweist.

EP 0 493 751 A2

Die Erfindung betrifft eine Anlage zum Aufnehmen, Aufzeichnen und Wiedergeben von Videobildern mit einer Videokamera, einem Bildaufzeichnungsgerät und einem Monitor.

Anlagen dieser Art finden immer weitere Verbreitung. Die Bildaufzeichnungsgeräte werden dabei immer komfortabler und bieten immer weitergehende Bedienungsmöglichkeiten und Programmiermöglichkeiten. Ein Nachteil dieses Fortschritts besteht aber darin, daß die Bedienung der Geräte immer komplizierter wird.

In vielen Fällen will man nun gar nicht von umfangreichen Bedienungsmöglichkeiten des Bildaufzeichnungsgeräts Gebrauch machen, sondern nur einige wenige Funktionen nutzen. Dies gilt insbesondere, wenn in Fachgeschäften oder Kaufhäusern von für diesen Zweck nicht besonders geschultem Verkaufspersonal Videoaufnahmen von Kunden gemacht werden sollen, die sich die Kunden hinterher ansehen möchten. Dies ist z.B. zweckmäßig, wenn sich ein Kunde eine neue Brille aussucht, da er infolge seiner Fehlsichtigkeit sich selbst nicht im Spiegel scharf sehen kann, wenn er das neue Brillengestell, was noch keine Gläser aufweist, trägt. Auch für andere Zwecke kann aber eine solche Anlage den Verkaufsumsatz fördern, z.B. beim Anprobieren von Hüten, Kleidern usw..

Man könnte zwar auf den Gedanken kommen, für die Anlage spezielle Bildaufzeichnungsgeräte zu konstruieren, die nur die Funktionen ermöglichen, die für den genannten Zweck tatsächlich erforderlich sind, dabei aber leichter zu bedienen sind. Der Nachteil besteht dann aber darin, daß diese Geräte nur noch in Kleinserien hergestellt werden können und die günstigen Preise, die bei der Massenherstellung möglich sind, nicht annähernd erreicht werden können.

Die Aufgabe der Erfindung besteht in der Verbesserung der Anlage dahingehend, daß durch eine verhältnismäßig einfach und kostengünstig aufgebaute Zusatzeinrichtung die Bedienung vereinfacht wird.

Die erfindungsgemäße Lösung besteht darin, daß die Anlage ein Steuergerät mit Paaren von Kontakten, von denen je einer mit je einem der Kontakte der Kontaktpaare der Bedienungsschalter und -tasten des Bildaufzeichnungsgeräts verbunden ist und die elektrisch miteinander verbindbar sind, mit Eingängen/Ausgängen für elektrische Signale, die Zustandsgrößen melden und mit entsprechenden Ausgängen/Eingängen des Bildaufzeichnungsgeräts verbunden sind, mit Bedienungstasten und mit Steuerschaltungen aufweist.

Es wird also in erster Linie die konventionelle Ausrüstung der Anlage verwendet, nämlich eine konventionelle Videokamera, ein konventionelles Bildaufzeichnungsgerät (z.B. ein Videorecorder oder ein digitaler Bildspeicher) und ein Monitor.

Das Steuergerät wird mit dem Bildaufzeichnungsgerät einmal dadurch verbunden, daß die Kontaktpaare des Bildaufzeichnungsgeräts, die durch Betätigung der entsprechenden Bedienungsschalter und -tasten miteinander verbunden bzw. kurzgeschlossen werden können, mit entsprechenden Kontaktpaaren im Steuergerät verbunden sind, wobei dann innerhalb des Steuergerätes das erwähnte Kurzschließen der Kontaktpaare und damit die Einleitung des Bedienungsvorgangs erfolgen kann. Man hat damit die Möglichkeit, ohne große und wesentliche Eingriffe in das Bildaufzeichnungsgerät die Steuerung in gewünschter Weise von außen vom Steuergerät aus durchzuführen, das die notendigen Bedienungstasten und Steuerschaltungen aufweist. Bedienungstasten sind dann nur noch für die wenigen Vorgänge erforderlich, die tatsächlich gewünscht werden. Die entsprechenden Signale werden durch die Steuerschaltungen umgesetzt, wobei dann in der richtigen Sequenz die Kontaktpaare im Steuergerät miteinander kurzgeschlossen werden, um die entsprechenden Funktionen des Bildaufzeichnungsgeräts zu bewirken. Andererseits ist das Steuergerät mit dem Bildaufzeichnungsgerät über Leitungen verbunden, die Zustandsgrößen in beiden Richtungen melden, z.B. das Aufleuchten einer Lampe, was durch das Anliegen einer Spannung an derselben signalisiert wird.

Die Einzelheiten, wie die Steuerschaltungen aufgebaut sind, werden dabei von den Eigenarten des Bildaufzeichnungsgeräts bestimmt. Können mit diesem Bildaufzeichnungsgerät unterschiedliche Anfangsmarken für Szenen mitaufgezeichnet werden, so würde bei der Betätigung der Taste "Aufnahme" am Steuergerät z.B. erst eine solche Markierung im Bildaufzeichnungsgerät gesetzt werden und dann anschließend die Aufzeichnung eingeleitet werden. In dem Moment, wo dann das Bildaufzeichnungsgerät meldet, daß die Aufnahme jetzt möglich ist, würde dies über eine entsprechende Meldeleitung dem Steuergerät gemeldet, so daß in der Nähe der Bedienungstasten eine entsprechende Lampe für "Aufnahme" zu leuchten beginnen würde, falls diese vorgesehen ist. Wurde dann anschließend die Stopptaste betätigt und dann die Wiedergabetaste gedrückt, so werden Steuersequenzen an das Videogerät geleitet, daß das Band bis zur vorher gesetzten Bildmarke zurückgespult wird. Ist diese erreicht, würde dann die Wiedergabe eingeleitet. Arbeitet diese dann, würde, falls vorgesehen, eine die Wiedergabe anzeigende Lampe am Steuergerät aufleuchten. Entsprechendes wäre bei einem anderen Bildaufzeichnungsgerät, z.B. einem digitalen Bildspeicher der Fall.

Die Bedienungsperson braucht also nicht mehr in die komplizierte Bedienung des Bildaufzeichnungsgeräts eingewiesen werden, sondern braucht nur noch wenige Tasten oder Schalter eines Steuergeräts zu bedienen, das ganz auf die gewünschten Bedienungsvorgänge eingerichtet ist.

Zweckmäßigerweise weist das Steuergerät logische Schaltungen auf. Die Einrichtungen zum elektrischen Verbinden der Kontakte der Kontaktpaare des Steuergeräts sind vorteilhafterweise Relais.

Weiter ist bei einer zweckmäßigen Ausführungsform vorgesehen, daß sie Beleuchtungseinrichtungen aufweist, die über das Steuergerät schaltbar sind, so daß diese Beleuchtungseinrichtungen eingeschaltet werden, wenn mit der Aufnahme begonnen wird.

Bei einer weiteren zweckmäßigen Ausführungsform ist vorgesehen, daß die Anlage einen Bilddrucker aufweist, so daß der Kunde das aufgenommene Bild mit nach Hause nehmen kann, um es dort noch einmal in Ruhe zu betrachten oder um auch einen Partner nach seiner Meinung zu fragen.

Eine weitere vorteilhafte Ausführungsform zeichnet sich dadurch aus, daß sie Einrichtungen zum gleichzeitigen Zeigen mehrerer Bilder aufweist. Der Kunde hat so die Möglichkeit, sein Gesicht z.B. gleichzeitig mit mehreren Brillen zu sehen und Vergleiche anzustellen. Die entsprechenden Einrichtungen zum Zeigen mehrerer Bilder (Multibild) ist in aufwendigeren Bildaufzeichnungsgeräten bereits enthalten und muß nur über das Steuergerät aktiviert werden. Ist diese Möglichkeit im Bildaufzeichnungsgerät nicht vorhanden, so kann ein entsprechender dafür erforderlicher digitaler Bildspeicher im Steuergerät vorgesehen sein.

Die Bedienungstasten des Steuergeräts und/oder die Anzeigen des Steuergeräts können im bzw. am Steuergerät vorgesehen sein. Sie können besonders unauffällig untergebracht werden, wenn sie in einem separaten Gehäuse angeordnet sind.

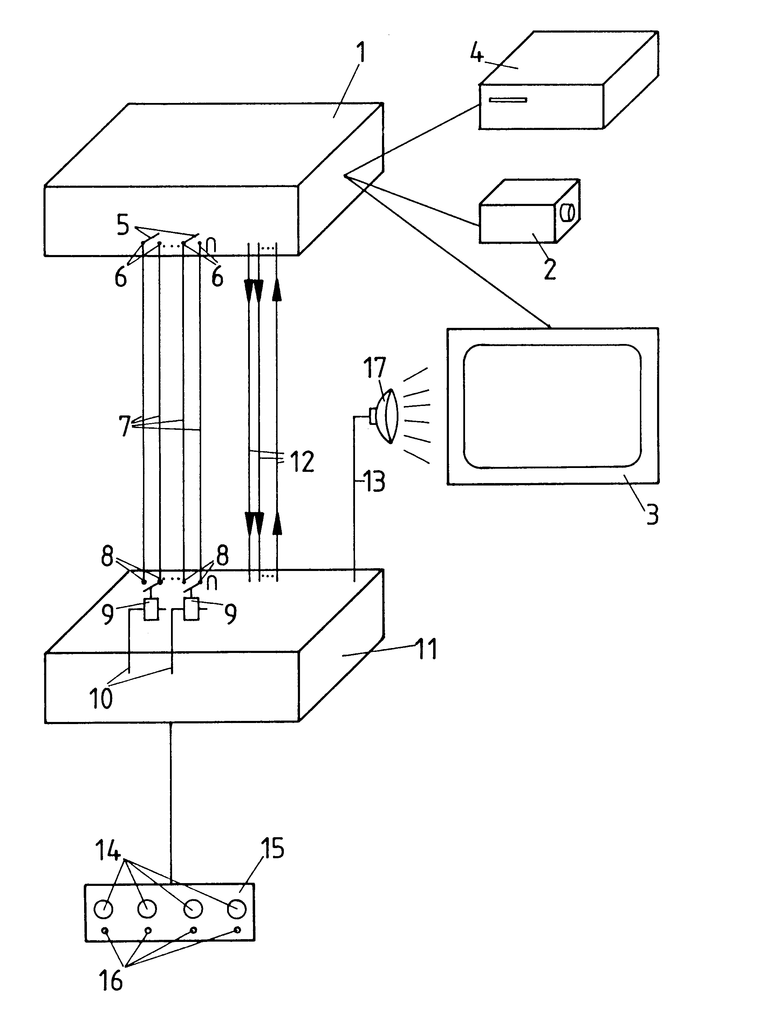

Die Erfindung wird im folgenden anhand einer vorteilhaften Ausführungsform unter Bezugnahme auf die beigefügte Zeichnung beschrieben, die schematisch eine vorteilhafte Ausführungsform zeigt.

Die Anlage der Erfindung weist ein Bildaufzeichnungsgerät 1, z.B. einen digitalen Bildspeicher oder einen Videorecorder 1 auf. Ferner ist eine Videokamera 2 und ein Monitor 3 vorgesehen, auf dem das aufgezeichnete Bild betrachtet werden kann. Dieses aufgezeichnete Bild kann auch mit einem Bilddrucker 4 ausgedruckt werden.

Das Bildaufzeichnungsgerät weist verschiedene Bedienungsschalter oder -tasten 5 auf, mit denen Kontakte 6 von entsprechenden Kontaktpaaren verbunden werden können, um die entsprechenden Bedienungsfunktionen einzuleiten. Diese Kontakte 6 sind über Leitungen 7 mit den Kontakten 8 von entsprechenden Kontaktpaaren von Relais 9 versehen, die über logische Schaltungen, Verstärker und dergleichen über elektrische Leitungen 10 erregt und entregt werden können. Das Bildaufzeichnungsgerät 1 und das Steuergerät 11, in dem die Relais 9 angeordnet sind, ist noch über Leitungen 12 mit dem Bildaufzeichnungsgerät 1 verbunden, über die Information über Betriebszustände in beiden Richtungen gemeldet werden. Über eine Leitung 13 kann noch eine Beleuchtungseinrichtung 17 selektiv vom Steuergerät 11 eingeschaltet werden, zweckmäßigerweise während der Aufnahme mit der Fernsehkamera 2.

Die Steuerung innerhalb des Steuergerätes 11 erfolgt mit Hilfe von logischen Schaltungen, die dem Fachmann bekannt sind und die der Fachmann ohne weiteres auswählen kann, wenn klar ist, welche Funktionen gewünscht werden und wie das Bedienungsschema des Bildaufzeichnungsgerätes 1 ist. Die Steuerung erfolgt dabei mit Hilfe von Tasten 14, die in einem separaten Gehäuse 15 angeordnet sind und bei denen für jede gewünschte Funktion eine Taste vorgesehen ist. Im Gehäuse 15 sind weiter Anzeigeleuchten 16 vorgesehen, die Betriebszustände, wie z.B. Aufnahme, Wiedergabe und dergleichen melden.

Weiterentwicklungen und Ausgestaltungen liegen im Bereich des Könnens des Fachmanns. So könnten z.B. die beiden in der Figur dargestellten Wiedergabetasten so ausgebildet und verbunden sein, daß mit der einen Wiedergabetaste ausgewählt wird, welche der letzten Bildsequenzen wiedergegeben werden soll, während die andere Taste als Starttaste für die Wiedergabe gilt.

Außer den erwähnten Funktionen kann das Steuergerät 11 selbstverständlich noch weitere Funktionen aufweisen. So kann z.B. beim Einschalten des Steuergerätes 11 automatisch eine Steuersequenz ausgeführt werden, mit der das Bildaufzeichnungsgerät auf den sogenannten AV-Eingang umgeschaltet wird, an den die Viedeokamera angeschlossen ist. Sollen die Bildsignale mit Hochfrequenz übertragen werden, so könnten durch diese Steuersequenz der bzw. die Tuner eingestellt werden, obwohl man zur Einsparung der sonst fällig werdenden Fernsehgebühren in vielen Fällen auf diese Tuner ganz verzichten wird.

**Patentansprüche**

1. Anlage zum Aufnehmen, Aufzeichnen und Wiedergeben von Videobildern mit einer Videokamera, einem Bildaufzeichnungsgerät und einem Monitor, dadurch gekennzeichnet, daß sie ein Steuergerät (11) mit Paaren von Kontakten (8), von denen je einer mit je einem der Kontakte (6) der Kontaktpaare der Bedienungsschalter und -tasten (5) des Bildaufzeichnungsgeräts verbunden ist und die elektrisch miteinander verbindbar sind, mit Eingängen/Ausgängen für elektrische Signale, die Zustandsgrößen melden und mit entsprechenden Ausgängen/Eingängen des Bildaufzeichnungsgeräts (1) verbunden sind, mit Bedienungstasten (14) und mit Steuerschaltungen aufweist.

2. Anlage nach Anspruch 1, dadurch gekennzeichnet, daß die Steuerschaltungen logische Schaltungen aufweisen.

3. Anlage nach Anspruch 1 oder 2, dadurch gekennzeichnet, daß die Einrichtungen zum elektrischen Verbinden der Kontakte (8) der Kontaktpaare des Steuergeräts (11) Relais (9) sind.

4. Anlage nach einem der Ansprüche 1 bis 3, dadurch gekennzeichnet, daß sie Beleuchtungseinrichtungen (17) aufweist, die über das Steuergerät (11) schaltbar sind.

5. Anlage nach einem der Ansprüche 1 bis 4, dadurch gekennzeichnet, daß sie einen Bilddrucker (4) aufweist.

6. Anlage nach einem der Ansprüche 1 bis 5, dadurch gekennzeichnet, daß sie Einrichtungen zum gleichzeitigen Zeigen mehrerer Bilder aufweist.

7. Anlage nach einem der Ansprüche 1 bis 6, dadurch gekennzeichnet, daß das Steuergerät (11) mit Anzeigen (16) für Betriebszustände versehen ist.

8. Anlage nach einem der Ansprüche 1 bis 7, dadurch gekennzeichnet, daß die Bedienungstasten (14) und/oder die Anzeigen (16) des Steuergeräts (11) in einem separaten Gehäuse (15) angeordnet sind.